# EUROPEAN PATENT APPLICATION

(11) **EP 4 174 716 A1**
(43) Date of publication of application: **03.05.2023**
(21) Application number: 21833495.1
(22) Date of filing: 28.06.2021
(51) Int. Cl.: G06K 9/00

(54) **PEDESTRIAN TRACKING METHOD AND DEVICE, AND COMPUTER READABLE STORAGE MEDIUM**

(30) Priority: 29.06.2020 CN 202010603573
(71) Applicant: ZTE Corporation, Shenzhen, Guangdong 518057 (CN)
(72) Inventor: DOU, Xiao, Shenzhen, Guangdong 518057 (CN); SHEN, Guang, Shenzhen, Guangdong 518057 (CN); HOU, Chunhua, Shenzhen, Guangdong 518057 (CN); LI, Dongfang, Shenzhen, Guangdong 518057 (CN)
(74) Representative: Canzler & Bergmeier Patentanwälte Partnerschaft mbB
(86) International application number: PCT/CN2021/102652
(87) International publication number: WO 2022/001925

(57) **Abstract**

A pedestrian tracking method and device, and a computer readable storage medium, relating to the technical field of communications. The pedestrian tracking method comprises: performing pedestrian trajectory analysis on a video screen acquired by a preset monitoring camera to generate a pedestrian trajectory picture set (S110); performing multi-modal feature extraction on the pedestrian trajectory picture set, and forming a pedestrian multi-modal database (S120); and inputting the pedestrian multi-modal database to a trained multi-modal recognition system, and performing pedestrian tracking to generate a movement trajectory of a pedestrian in the preset monitoring camera (S130).

## Description

The present application claims priority from the Chinese patent application No. 202010603573.9 filed with the China Patent Office on June 29, 2020, the entire contents of which are incorporated herein by reference.

### TECHNICAL FIELD

The present application relates to the field of communication technology.

### BACKGROUND

Video surveillance has spread throughout corners of our lives, and the face identification technology is very mature now. However, in practical security application scenarios, not all cameras can capture clear faces, and due to the shielding of hair, a mask, a hat or the like, it is difficult to determine the identity of a pedestrian through a face identification system. Moreover, in practical application scenarios, it is difficult to cover all areas with one camera, and a plurality of cameras generally do not overlap with each other. Therefore, a multi-camera tracking and retrieving system for locking and searching for a person is very necessary.

At present, the multi-camera tracking technology is widely concerned and remarkably developed in the industrial and academic circles. From the political aspect, the ministry of public security has launched the concept of safe cities, and issues a plurality of pre-research subjects, and related industrial standards are also established intensely.

### SUMMARY

In one aspect, an embodiment of the present application provides a pedestrian tracking method, including: performing pedestrian trajectory analysis on video pictures acquired by preset surveillance cameras to generate a pedestrian trajectory picture set; performing multi-modal feature extraction on the pedestrian trajectory picture set, and forming a pedestrian multi-modal database; and inputting the pedestrian multi-modal database to a trained multi-modal identification system, and performing pedestrian tracking to generate a movement trajectory of a pedestrian in the preset surveillance cameras.

In another aspect, an embodiment of the present application provides a pedestrian tracking device, including: a memory, a processor, a program stored on the memory and executable on the processor, and a data bus for connection and communication between the processor and the memory; where the program is executed by the processor to implement at least one operation of the pedestrian tracking method according to any embodiment of the present application.

In still another aspect, an embodiment of the present application provides a computer-readable storage medium having one or more programs stored thereon, where the one or more programs are executable by one or more processors to implement at least one operation of the pedestrian tracking method according to any embodiment of the present application.

### BRIEF DESCRIPTION OF DRAWINGS

FIG. 1 is a flowchart of a pedestrian tracking method according to an embodiment of the present application.
FIG. 2 is a flowchart of a pedestrian tracking method according to an embodiment of the present application.
FIG. 3 is a block diagram of a pedestrian tracking system according to an embodiment of the present application.

### DETAIL DESCRIPTION OF EMBODIMENTS

It will be appreciated that the specific embodiments described herein are merely for illustration of the present application and are not intended to limit the present application.

In the description below, suffixes representing elements, such as "module", "component" or "unit", are used only for the convenience of explanation of the present application, and have no specific meaning by themselves. Thus, "module", "component" or "unit" may be used interchangeably.

The most commonly used multi-camera tracking and retrieving system is pedestrian re-identification. In this field, most researchers adopt a scheme of locating and retrieving pedestrians based on pedestrian picture features, which poses a high requirement on the robustness of pedestrian features. However, the actual scenarios are often very complex. There may be, for example, no frontal face, posture changes, clothing changes, shading, light, a low camera resolution, indoor and outdoor environment changes and the like, which often cause failed pedestrian retrieval and tracking.

The present application provides a multi-modal based multi-camera tracking and retrieving system, which is based on multi-target pedestrian tracking and combines a pedestrian re-identification network, pedestrian quality analysis, pedestrian attribute analysis, face identification and time and spatial position information of a camera, to further improve the accuracy and speed of multi-camera tracking and retrieving.

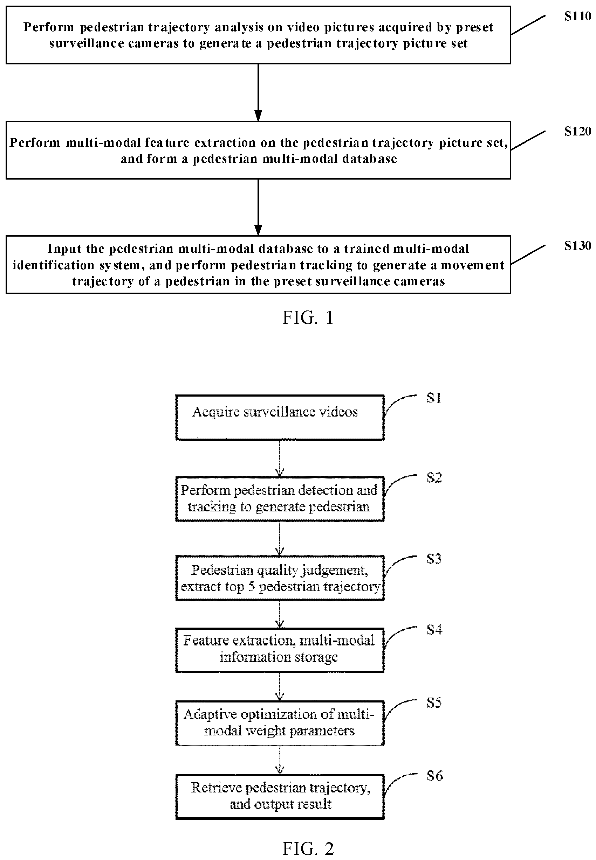

As shown in FIG. 1, an embodiment of the present application provides a pedestrian tracking method, which includes the following operations S110 to S130.

At operation S 110, performing pedestrian trajectory analysis on video pictures acquired by preset surveillance cameras, to generate a pedestrian trajectory picture set.

At operation S 120, performing multi-modal feature extraction on the pedestrian trajectory picture set, and forming a pedestrian multi-modal database.

At operation S130, inputting the pedestrian multi-modal database to a trained multi-modal identification system, and performing pedestrian tracking, to generate a movement trajectory of a pedestrian in the preset surveillance cameras.

In a possible implementation, the pedestrian tracking method may further include: receiving a target pedestrian trajectory, extracting a multi-modal feature of the target pedestrian, and searching a first pedestrian trajectory matched with the multi-modal feature of the target pedestrian in the pedestrian multi-modal database; combining the target pedestrian trajectory and the first pedestrian trajectory to generate a second pedestrian trajectory, and querying a pedestrian trajectory matched with the second pedestrian trajectory in the pedestrian multi-modal database; and generating, according to the pedestrian trajectory matched with the second pedestrian trajectory, the movement trajectory of the target pedestrian in the preset surveillance cameras.

In a possible implementation, the pedestrian tracking method may further include: selecting an image with a quality parameter in a preset range from the pedestrian trajectory picture set, and performing feature extraction on the selected image having the quality parameter in the preset range.

In a possible implementation, according to a training set, influencing factors of modal parameters in the multi-modal identification system may be adjusted to obtain the trained multi-modal identification system.

In a possible implementation, picture names in the pedestrian trajectory picture set may include: trajectory ID, video frame number, picture shooting time and/or location information.

In a possible implementation, generating the movement trajectory of the target pedestrian in the preset surveillance cameras may include: analyzing a movement rule of the pedestrian according to a graph structure of a distribution topology of the surveillance cameras.

Specifically, a space-time topological relation of the surveillance cameras may be combined with an appearance expression model matching algorithm of the target, and the graph structure of topology of the surveillance cameras may be used for analyzing the movement and transfer rules of the pedestrian, so as to implement space-time constraint on the multi-camera tracking of the pedestrian. If the tracked target disappears at a certain node (camera), target detection is performed at adjacent nodes within several steps, and then matching and correlation are performed.

Further, the spatial relationship defines whether an edge is established between nodes, as well as the orientation of the edge. During establishment of the graph model, if two nodes are available in one step in the physical spatial position, namely, there is no other intermediate node, an edge will be established between the two nodes.

In a practical application system, a statistical learning method is adopted to establish time constraint for movement of the target, so as to define reasonable weight values among nodes. It is often difficult to acquire a statistical rule of data of a set of camera nodes, which is determined by many factors, including: a law of motion of the target, a geographic location of the camera, changes in the surrounding traffic environment of the camera, and the like. In an embodiment of the present application, all observation times are clustered and a variance in each class is calculated; and weight initialization is performed according to relative coordinates of the cameras and a route condition, and correction is performed according to pedestrian re-identification comparison.

Considering that one pedestrian cannot appear in a plurality of cameras at the same time and the time statistical rule is desired to be considered when the pedestrian moves from one camera to another, the space-time constraint can be used to remarkably reduce the number of samples to be queried, thereby reducing the query time, and improving the retrieval performance.

Combining the spatial longitude and latitude coordinates of the cameras and the space constraints of the walkable route, a connection relation between the camera nodes and an initial moving time can be estimated. Then, continuous correction is made in combination with an interval of subsequent pedestrian re-identifications, so that an edge weight of the camera network topology is obtained.

In subsequent query, adjacent nodes in the camera network topology are firstly determined taking the node as a center according to the trajectory to be queried, and then time ranges of data queried in the adjacent nodes are limited by combining the edge weight. Trajectory matching is made in the corresponding time range of each adjacent node.

When the target is matched in an adjacent node A, query is further performed in adjacent nodes in the camera network topology taking the node A as a new network center, and the pedestrian traveling trajectory and the time nodes when the pedestrian appears are updated. The pedestrian traveling trajectory is drawn after the query is finished.

If the target is not matched in a recommended time range, further query is performed in an expanded time range, and if still not matched, query is performed in a next layer of adjacent nodes taking the node A as the center.

In a possible implementation, the multi-modal feature may include one or more of: a pedestrian feature, a face feature, and a pedestrian attribute feature. The pedestrian feature may include one or more of: a tall, short, fat or thin body and posture feature. The face feature (information) may include one or more of: a facial shape feature, a facial expression feature, and a skin color feature. The pedestrian attribute feature (information) may include one or more of: a hair length, a hair color, a clothing style, a clothing color, and a carried object.

An embodiment of the present application further provides a pedestrian tracking device, including a memory, a processor, a program stored on the memory and executable on the processor, and a data bus for connection and communication between the processor and the memory. When executed by a processor, the program may cause at least one operation of the pedestrian tracking method according to any embodiment of the present application to be implemented, such as the operations shown in FIG. 1.

An embodiment of the present application further provides a computer-readable storage medium having one or more programs stored thereon, where the one or more programs are executable by one or more processors to implement at least one operation of the pedestrian tracking method according to any embodiment of the present application, such as the operations shown in FIG. 1.

An embodiment of the present application discloses a system for retrieving and tracking a same pedestrian under different cameras by means of multi-modal information fusion. As shown in FIG. 2, the pedestrian tracking method implemented by the system may include the following operations S1 to S6.

At operation S1, acquiring videos of different cameras in a monitored area.

At operation S2, performing pedestrian detection on the acquired offline videos, and completing pedestrian trajectory extraction. Pictures in the corresponding pedestrian trajectory picture set are named compositely after the trajectory ID, the video frame number and the corresponding time and location (e.g., 0001_00025_202003210915_NJ), and stored in a sub-folder named after the trajectory ID.

At operation S3, extracting, through pedestrian quality analysis, images with a quality parameter within a preset range in the pedestrian trajectory picture set. In a possible implementation, 5 pictures with better picture quality and more dispersed time may be selected as the top 5 pedestrian trajectories.

At operation S4, extracting a pedestrian feature, a face feature (set to null if no face data is detected) and a pedestrian attribute feature from the top 5 pedestrian trajectories using a pedestrian re-identification network, a face identification network and a pedestrian attribute network, respectively, and storing these features and other information (the trajectory ID, the video frame number, the time and location) in a database after the extraction.

In a possible implementation, the pedestrian re-identification network is a technology for judging whether a specific pedestrian is present in an image or video sequence with a computer vision technology, and the pedestrian features is determined with the pedestrian re-identification network.

The pedestrian attribute network is used for extracting a pedestrian attribute. The pedestrian attribute is semantic description about the appearance of a pedestrian, and different parts of a human body have different attributes. For example, attributes related to the head include "short hair", "long hair" and the like; attributes related to the clothing style include "long sleeves", "short sleeves", "one-piece dress", "shorts", and the like; and attributes related to the carried object include "backpack", "single-shoulder bag", "handbag" and "no carried object". The pedestrian attributes may be selected and subdivided in different environments and occasions, so as to facilitate the pedestrian re-identification. The pedestrian attribute information, associated with the appearance information, is more specific semantic information, and in pedestrian comparison or retrieval, irrelevant data can be filtered according to similarities of the pedestrian attributes.

At operation S5, optimizing multi-modal weight parameters with a batch of manually labeled test sets.

At operation S6, outputting a final testing result.

Compared with other schemes for locating and retrieving based on merely pedestrian picture features, the scheme provided in the embodiments of the present application combines multi-modal information such as human faces, pedestrian attributes, time, space and the like, so that the retrieval is more robust, and can better adapt to complex real scenarios.

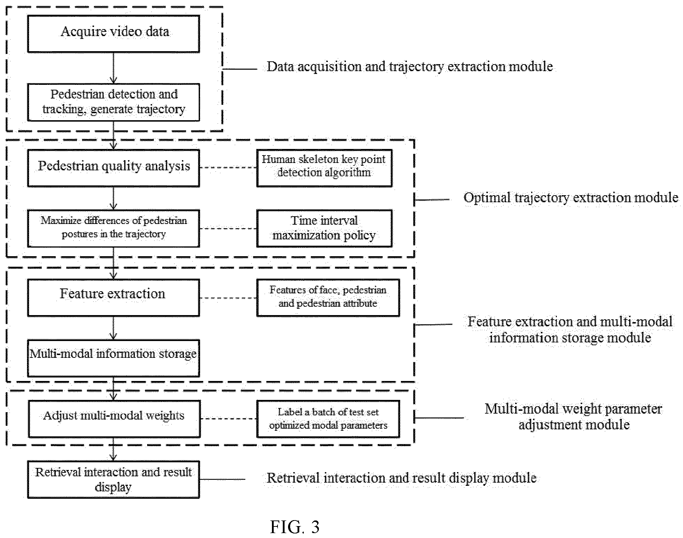

FIG. 3 is a block diagram of a multi-camera pedestrian tracking system based on multi-modal retrieval according to an embodiment of the present application. As shown in FIG. 3, the system may include: a data acquisition and trajectory extraction module, an optimal trajectory extraction module, a feature extraction and multi-modal information storage module, a multi-modal weight parameter adjustment module, and a retrieval interaction and result display module.

The data acquisition and trajectory extraction module is configured to acquire offline videos image from surveillance video units, where each surveillance unit is merely responsible for data storage and extraction in its own area, store the offline video into a specified folder, track and extract trajectories of the stored videos, and automatically label each pedestrian picture with a trajectory ID, a picture frame number, time information and location information.

The optimal trajectory extraction module is configured to screen out 5 pedestrian trajectory pictures with relatively complete pedestrian quality and a larger time interval from the pedestrian trajectories.

The feature extraction and multi-modal information storage module is configured to extracts pedestrian, face and pedestrian attribute features, and stores these features, as well as a trajectory ID, time and spatial information of each pedestrian trajectory picture into a pedestrian multi-modal database.

The multi-modal weight parameter adjustment module is configured to optimize weights of multi-modal parameter values with a batch of labeled test sets, and finally make different data sets have respective optimal modal parameters.

The retrieval interaction and result display module is configured to search for trajectories based on a trajectory or picture in an interfacing manner, display an optimal trajectory and a rank of optimal trajectories under each camera, and find a trajectory in the video through a picture frame number in the trajectory, and play the trajectory in real time.

The multi-modal based multi-camera tracking and retrieving system provided in the embodiments of the present application can acquire offline videos of a monitored area, perform pedestrian retrieval on pedestrians in the video, extract a pedestrian trajectory with a trajectory tracking algorithm, and name each picture compositely after the trajectory ID, the video frame number and the corresponding time and location, and performing pedestrian quality analysis to extract top 5 pedestrian pictures in the trajectory. The face, pedestrian and pedestrian attribute features of each trajectory picture is extracted, and then all the multi-modal information are stored in a database after the extraction. A test set is used for self-adaptive adjustment on the multi-modal system parameters. Finally, multi-camera pedestrian trajectory search is completed, and the result is displayed on the interface. Compared with a manual retrieval method, this method greatly reduces the workload, achieves high efficiency as well as high accuracy. Further, this solution can implement multi-camera pedestrian retrieval, and provide powerful support for intelligent security and protection and safe cities.

Referring to FIG. 2, the above operations are described in detail.

At operation S1, determining a retrieval area, and acquiring an offline surveillance video of the area. The area may be a relatively fixed place such as a mall, an office building, a residential community, a community, or the like, and the offline video should be a surveillance video of a certain time period, at least a same day. The video is saved locally, and labeled with a camera ID, a location and a start time. In this embodiment, three cameras of different angles are selected, with respective camera IDs C0, C1 and C2.

At operation S2, performing pedestrian detection and trajectory tracking on the offline video of each camera. Pictures in the corresponding pedestrian trajectory picture set are named compositely after the trajectory ID, the video frame number and the corresponding time and location (e.g., 0001_00025_202003210915_NJ), and stored in a sub-folder named after the trajectory ID. Here, the pedestrian detection model adopts a single shot multibox detector (SSD) algorithm to acquire a location box and a boundary box of a pedestrian in a current frame, and adopts a Hungary tracking algorithm to obtain a pedestrian trajectory.

At operation S3, using a pedestrian quality analysis model on the pedestrian trajectory acquired in the previous operation. Here, a human skeleton key point detection algorithm is used to determine integrity of a pedestrian according to the number of skeleton key points. If the number of skeleton key points of the pedestrian in the picture is equal to a preset value, it is determined that the acquired picture information of the pedestrian is complete. In this embodiment, the selected key points include: a head, shoulders, palms, and soles. For a trajectory with more pedestrian pictures, 5 pictures with better quality and more dispersed time in the trajectory are extracted as top 5 pedestrian trajectories.

At operation S4, extracting a pedestrian feature, a face feature (set to null if no face data is detected) and a pedestrian attribute feature from the top 5 pedestrian trajectories using a pedestrian re-identification network, a face identification network and a pedestrian attribute network, respectively, and storing these features and other information (the trajectory ID, the video frame number, the time and location) in a pedestrian multi-modal database after the extraction.

At operation S5, using a self-established training set since the data set for multi-camera tracking has very strict requirements on the scenario and no resource is available on the network, and extracting offline surveillance videos under three different cameras named C0, C1, and C2, respectively. Then, pedestrian multi-target detection and tracking, checking and manual labeling are performed on the offline videos. The query data belongs to the camera C0, and the gallery data belongs to two cameras C1 and C2. By using the labeled training set optimized multi-modal identification system and after the above operation S4, a series of multi-modal information is stored in the database (the database belongs to a multi-modal weight optimized database, and is no conflict with the information retrieval database generated in the previous operation S4). Each trajectory includes 5 pictures. In comparison of the face, pedestrian features and pedestrian attributes, the features are compared in batches, then a retrieval mode of C0->C1, C0->C2 is adopted, and finally, a retrieval hit rate for C0->C1, C0->C2 is counted. Thereafter, the multi-modal weight parameters are dynamically adjusted, C0->C1, C0->C2 is performed again and a retrieval hit rate is counted. When a highest retrieval hit rate is reached, the current multi-modal parameters are considered to be the optimal multi-modal parameters, which means that the optimization adjustment of the multi-modal parameter features is completed.

In operation S6, the optimized multi-modal weight parameters are finally used to perform multi-camera pedestrian retrieval on the information retrieval database generated in operation S4, and then a final testing result is output. According to the embodiments of the present application, finally, trajectory search based on a trajectory or picture in an interfacing manner can be provided, an optimal trajectory and a rank of optimal trajectories under each camera can be displayed, and a trajectory in the video can be found through a picture frame number in the trajectory, and played in real time.

The multi-modal based multi-camera tracking and retrieving system provided in the embodiments of the present application can be applied to the following two scenarios: pedestrian trajectory search and pedestrian picture search. The trajectory ID, the pedestrian feature, the face feature, the pedestrian attribute and the camera location information in the database are used for rapid and accurate retrieval of a trajectory or picture, and precise matching is achieved with the constraint among different features.

A task goal of trajectory matching is: randomly selecting an extracted trajectory, retrieving according to the multi-modal feature, and matching all trajectories related to the selected trajectory in a same video and among different videos. The specific implementation may include the following operations S11 to S15.

At operation S11, determining a retrieval area, and acquiring an offline surveillance video of the area. The area may be a relatively fixed place such as a mall, an office building, a residential community, a community, or the like, and the offline video should be a surveillance video of a certain time period, at least a same day. The video is saved locally, and labeled with a camera ID, a location and a start time. In this embodiment, three cameras of different angles are selected, with respective camera IDs C0, C1 and C2.

At operation S12, performing pedestrian detection and trajectory tracking on the offline video of each camera. The corresponding pedestrian trajectory picture is named compositely after the trajectory ID, the video frame number and the corresponding time and location (e.g., 0001_00025_202003210915_NJ), and stored in a sub-folder named after the trajectory ID. Here, the pedestrian detection model adopts an SSD algorithm to acquire a location box and a boundary box of a pedestrian in a current frame, and adopts a Hungary tracking algorithm to obtain a pedestrian trajectory.

At operation S13, using a pedestrian quality analysis model on the pedestrian trajectory acquired in the previous operation. Here, a human skeleton key point detection algorithm is used to determine integrity of a pedestrian according to the number of skeleton key points. For a trajectory with more pedestrian pictures, 5 pictures with better quality and more dispersed time in the trajectory are extracted as top 5 pedestrian trajectories.

At operation S14, extracting a pedestrian feature, a face feature (set to null if no face data is detected) and a pedestrian attribute feature from the top 5 pedestrian trajectories using a pedestrian re-identification network, a face identification network and a pedestrian attribute network, respectively, and storing these features and other information (the trajectory ID, the video frame number, the time and location) in an information retrieval database after the extraction.

At operation S15, completing trajectory matching and graph matching. Regarding priorities of matching within a video and matching among different videos, considering that images in a same video are homologous data and can better guarantee the accuracy in matching, the trajectory matching within the same video is preferentially processed. Meanwhile, regarding priorities of the features, considering that the face feature is the most robust feature of a pedestrian, face feature comparison of the pedestrian is preferentially performed. According to the structural features stored in the operation S14 and a sequence of different features and priorities of the trajectory matching within a video and among videos, the matching process includes the following operations 1) to 3).
1) Firstly, trajectory matching within a video is performed. A face feature in a target trajectory is firstly used for batched feature comparison with other trajectories with a face feature. If the feature is matched, and the pedestrian feature comparison has certain correlation with batched feature comparison of pedestrian attributes, the trajectory is considered to be successfully matched. Secondly, the matched trajectory is combined with the target trajectory to serve as a second pedestrian trajectory. Query is performed in the rest trajectories with a query algorithm using batched feature comparison of pedestrian features and pedestrian attribute features, during which a re-ordering algorithm is used for trajectory matching. This process fully combines a stable trajectory obtained by preliminary query, incorporates samples containing more gestures and angles in the second pedestrian trajectory, and achieves a more stable query in the process. Thus, the trajectory matching within the video is completed.
2) Then, trajectory matching among videos is performed. Similar to the trajectory matching within a video, batched feature matching is firstly performed on a face feature in query and pedestrian trajectories in adjacent nodes in the space-time constraint. Then, the primarily matched samples are combined as query to perform query again in adjacent nodes. In contrast, a threshold for feature comparison in the process is properly lowered to account for variations in the data source among cameras.
3) A pedestrian picture is used for searching for pedestrian pictures. The inputted picture to be queried is subjected to structural feature extraction, and then to pedestrian detection, pedestrian feature extraction, pedestrian attribute identification, face detection and face feature extraction to complete feature structuring. When a picture is used for searching for pictures, query is firstly performed in a video trajectory of a suspicious node, and when a target trajectory is found, further query is performed using a trajectory matching algorithm.

If the target pedestrian is not found at the suspicious node, the range is further expanded to perform full query in adjacent nodes. If an approximate time range can be determined, the retrieval efficiency and accuracy can be further improved.

So far, the processes of searching for a trajectory through pedestrian trajectory matching and searching for pedestrian pictures with a pedestrian picture are completed.

In summary, the technical solution provided in the embodiments of the present application may include the following operations 11) to 16).

In operation 11), while a pedestrian trajectory is extracted, each pedestrian picture is automatically labeled with a trajectory ID, time information and location information, and in subsequent multi-camera retrieval, the trajectory ID, the picture frame number, the time and space information may be used. Meanwhile, the system can perform trajectory extraction on a plurality of videos under a plurality of cameras simultaneously.

In operation 12), a human skeleton key point detection technology is used for pedestrian quality analysis, through which several key points are selected. The integrity of a pedestrian is determined on the number of detected skeleton key points, and an integrity score is output, according to which some pedestrian pictures with poor quality are extracted (to exclude some pedestrian pictures with serious shielding). Then, 5 pictures with large time intervals in the trajectory are selected according to the time information of the pictures (because the pedestrians have smaller gesture changes between adjacent frame pictures, and the trajectory features of a same pedestrian with different gestures are more discriminative, while the computation amount in trajectory matching can be reduced with the five pictures).

In operation 13), the present application combines the multi-modal information fusion of pedestrian multi-target tracking, key point skeleton detection, pedestrian re-identification, pedestrian attribute structuring, face identification, topological space-time constraint of the cameras and the like, to implement the scheme for multi-camera pedestrian tracking and retrieving.

In operation 14), the features after the multi-modal information fusion are used to better implement searching for pedestrian trajectories based a pedestrian trajectory and searching for a pedestrian trajectory based on a pedestrian picture among multiple cameras, and finally implement multi-camera tracking.

In operation 15), in the multi-camera tracking of the target pedestrian, a huge data volume may be involved, making full search query almost impossible. The system of the present application combines the space-time topological relation of the camera with an appearance expression model matching algorithm of the target, and use the graph structure of the camera network topology for analyzing the pedestrian movement and transfer rules, so as to implement space-time constraint on the multi-camera tracking of the pedestrian.

In operation 16), a batch of labeled data sets of actual scenarios are adopted to optimize weight parameters among modalities, and thus achieve the optimal effect of multi-camera tracking and retrieving.

The pedestrian tracking method and device, and the computer-readable storage medium provided in the embodiments of the present application can automatically complete multi-camera tracking and retrieving, break through the viewing angle limitation of a single fixed camera, avoid manual playback of a large number of surveillance videos to search and retrieve a target, and greatly increase the retrieval efficiency as well as the tracking range. By utilizing multi-modal information, the multi-camera retrieval features integrate various modal information, including face, pedestrian, attribute and time-space information, to form multi-modal feature complementation. The integrated features have more feature discriminability, better robustness in multi-camera tracking and retrieving, as well as improved retrieval precision. The system can adaptively adjust the multi-modal weight parameters through the test sets, which solves the cross-domain problem of the cameras to a great extent, and , by adjusting the parameters, can better adapt to different surveillance scenarios. The system, with a good human-computer interaction interface, can configure camera location information and modal weight parameter information in an interfacing manner, can, through key operation, pedestrian tracking, feature extraction and feature storage, search for trajectories based on a trajectory or pedestrian picture in an interfacing manner, display an optimal trajectory on the interface, and search and rank trajectories of different cameras, and can play the trajectories. The database information is visualized, so as to facilitate operation and use.

Those of ordinary skill in the art will appreciate that all or some operations of the above described method, functional modules/units in the system and device may be implemented as software, firmware, hardware, and suitable combinations thereof.

In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, a random access memory (RAM), read-only memory (ROM), an electrically erasable programmable read-only memory (EEPROM), a flash memory or any other memory technology, a CD-ROM, a digital versatile disk (DVD) or any other optical disk storage device, a magnetic cassette, a magnetic tape, a magnetic disk storage means or any other magnetic storage device, or any other medium which can be used to store the desired information and accessed by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The preferred embodiments of the present application have been described above with reference to the accompanying drawings, but the scope of the present application is not limited thereby. Any modifications, equivalent substitutions, and improvements made by those skilled in the art without departing from the scope and spirit of the present application are intended to be within the scope of the claims of the present application.

## Claims

1. A pedestrian tracking method, comprising:
performing pedestrian trajectory analysis on video pictures acquired by preset surveillance cameras to generate a pedestrian trajectory picture set;
performing multi-modal feature extraction on the pedestrian trajectory picture set, and forming a pedestrian multi-modal database; and
inputting the pedestrian multi-modal database to a trained multi-modal identification system, and performing pedestrian tracking to generate a movement trajectory of a pedestrian in the preset surveillance cameras.

2. The method according to claim 1, further comprising:
receiving a target pedestrian trajectory, extracting a multi-modal feature of the target pedestrian, and searching a first pedestrian trajectory matched with the multi-modal feature of the target pedestrian in the pedestrian multi-modal database;
combining the target pedestrian trajectory and the first pedestrian trajectory to generate a second pedestrian trajectory, and querying a pedestrian trajectory matched with the second pedestrian trajectory in the pedestrian multi-modal database; and
generating, according to the pedestrian trajectory matched with the second pedestrian trajectory, the movement trajectory of the target pedestrian in the preset surveillance cameras.

3. The method according to claim 1, further comprising: selecting an image with a quality parameter in a preset range from the pedestrian trajectory picture set, and performing feature extraction on the selected image having the quality parameter in the preset range.

4. The method according to claim 1, wherein the trained multi-modal identification system is obtained by adjusting, according to a training set, influencing factors of modal parameters in the multi-modal identification system.

5. The method according to claim 1, wherein picture names in the pedestrian trajectory picture set comprise: trajectory ID, video frame number, picture shooting time and location information.

6. The method according to claim 1, wherein generating the movement trajectory of the target pedestrian in the preset surveillance cameras comprises:
analyzing a movement rule of the pedestrian according to a graph structure of a distribution topology of the surveillance camera.

7. The method according to any one of claims 1 to 6, wherein the multi-modal feature comprises one or more of: a pedestrian feature, a face feature, and a pedestrian attribute feature.

8. The method according to claim 7, wherein the pedestrian feature comprises one or more of: a tall, short, fat or thin body and posture feature;
the face feature information comprises one or more of: a facial shape feature, a facial expression feature, and a skin color feature; and/or
the pedestrian attribute information comprises one or more of: a hair length, a hair color, a clothing style, a clothing color, and a carried object.

9. A pedestrian tracking device, comprising: a memory, a processor, a program stored on the memory and executable on the processor, and a data bus for connection and communication between the processor and the memory; wherein the program, when executed by the processor, causes the pedestrian tracking method according to any one of claims 1 to 8 to be implemented.

10. A computer-readable storage medium having one or more programs stored thereon, wherein the one or more programs are executable by one or more processors to implement the pedestrian tracking method according to any one of claims 1 to 8.
